(19) Europäisches Patentamt

European Patent Office

Office européen des brevets

(11) **EP 1 646 057 A2**

(12) **EUROPEAN PATENT APPLICATION**

(43) Date of publication:
**12.04.2006 Bulletin 2006/15**

(51) Int Cl.:
*H01F 1/00* (2006.01)   *B42D 15/00* (2006.01)
*G07D 7/04* (2006.01)   *B41M 3/14* (2006.01)
*H01F 41/16* (2006.01)

(21) Application number: **05021969.0**

(22) Date of filing: **07.10.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **09.10.2004 EP 04024139**

(71) Applicant: **European Central Bank
60311 Frankfurt am Main (DE)**

(72) Inventors:
• **Arrieta, Antonio J.
60311 Frankfurt (DE)**
• **Lopez, Raul Diez
20200 Beasain (ES)**
• **Tejada, Javier, Dr. c/o Univ. de Barcelona
08028 Barcelona (ES)**

(74) Representative: **Luderschmidt, Schüler & Partner GbR
Patentanwälte,
John-F.-Kennedy-Strasse 4
65189 Wiesbaden (DE)**

(54) **Security document and method for identification and/or authentication of a security document**

(57)   A security document (1) comprises on its surface a predetermined area (4) on which a magnetic composition is deposited. The magnetic composition comprises magnetic nanoparticles being superparamagnetic above a predetermined blocking temperature and being hysteretic below the blocking temperature, the blocking temperature preferably being below room temperature. The security document can be identified and/or authenticated by a method, wherein

- the AC susceptibility of said magnetic composition is measured at one or more predetermined frequencies at one or more predetermined temperatures; and
- the result is compared to one or more predetermined values.

Fig. 1

Description

## BACKGROUND OF THE INVENTION

1. Field of the invention

The present invention relates to security means for security documents such as banknotes, passports, chequebooks, etc, and more preferably to magnetic security means.

2. Description of the Related Art

The use of self-authenticating security features for producing documents serves for protecting them against unauthorized reproduction by forgers. This is necessary, in particular, for securities such as banknotes, checks, traveller's checks, stocks, etc. There is also a need for securing papers which do not have a direct monetary value, such as identification papers, passports etc., against unauthorized copying.

In particular, in the case of securities, which are circulated daily, for example, banknotes, a forger may succeed in copying the optically recorded document contents, for example, the optical printed image of the banknotes, in a deceptively precise way. A protection against this is the authenticity feature contained in the safety paper, used for producing the documents, as a result of the structure imparted to the safety paper during manufacture which authenticity feature supposedly practically cannot be copied by a forger with the means available to him. Moreover, the application of watermarks or the introduction of a safety thread into the paper is known. These conventional measures, however, can no longer be considered satisfactory in view of the advances of the working means employed by forgers.

As the common machine language for bank checks handling the Magnetic Ink Character Recognition (MICR) was developed, the early work on this system dates back to 1950. The MICR is based on the use of specifically designed symbols for different characters, e.g. numbers and special symbols as well. The symbols are printed on the security document by the use of magnetic ink. For reading the data to be stored, a magnetic reading head is used which converts the symbol in a signal having a characteristic waveform for the identification thereof.

The principle of the MICR is that the symbols can be seen and easily read with the naked eye, even if the conventional shapes of the characters are modified to take full advantage of the system. Furthermore, the data can be automatically read simply by using a magnetic reading head. The MICR, therefore, does not allow the issuing authorities of security documents to record information without public awareness. The MICR has further a limited storage capacity.

A typical storage magnetic medium consists of fine magnetic particles suspended in an organic binder adhering to a polymer substrate. During the recording process, different regions of the medium are briefly exposed to strong magnetic fields, so that each grain is magnetised in the desired direction. Each grain could thus store one bit of data, so greater storage density could ideally be achieved by a medium containing many small grains than one containing a few large grains. However, in order to serve as reliable storage devices, the grains must be capable of retaining their magnetisations for long periods of time in weaker, arbitrarily oriented ambient magnetic fields.

Very small magnetic particles for use in magnetic storage media that are known typically have a particle size of about 0.1 micrometer. These particles readily retain magnetic patterns and thereby provide a method and means for magnetic information storage. However, these magnetic compositions comprising magnetic nanoparticles have an inherent functional performance limitation and problem in that the magnetic compositions are super paramagnetic at room temperature, and are considered to be generally unsuitable for magnetic recording applications.

US-A-5,714,536 and US-A-5,889,091 refer to magnetic compositions comprising nanoparticles, the disclosure of which is incorporated herein by reference to its entirety.

The properties of magnetic materials is a result of the exchange interaction, the magnetic anisotropy owing to the symmetry of the crystal, the magnetic dipole interaction that breaks the magnet into domains and interactions of domain walls with defects, impurities, itinerant electrons, etc. The fundamental equation of motion of the magnetisation is that proposed by Landau - Lifshitz which may be used to explain the equilibrium magnetic configuration, ferromagnetic resonance, spin waves, etc. For a typical ferromagnet, the magnetic moment of a nanometer size grain is already a few thousand Bohr's magnetons and is qualitatively similar to the arrow of a compass.

The two most important ingredients to explain the physics of a single domain particle or grain are; the strong exchange interaction between individual spins $\varepsilon_{exch}$ and the energy of magnetic anisotropy, $\varepsilon_{an}$. The exchange has its origin in the Coulomb interaction between the electrons of neighbouring atoms and is of the order of the Curie temperature. The minimum of magnetic anisotropy corresponds when the magnetic moment is directed along a certain direction called the easy axis. Typically $\varepsilon_{exch}/\varepsilon_{an} \approx 10^5 - 10^3$, In the absence of an external magnetic field the up and down orientations of the net spin S have the same energy, existing, however, between the two orientations the barrier height U of the magnetic anisotropy. That is, the barrier height U determines, together with the temperature, the probability transition between the two orientations

$$\Gamma = \nu \exp(-U/T)$$

where $\nu$ is the so-called attempt frequency and U is expressed in Kelvin. The barrier height $U = KV$ where V is the volume of the particle and K is the magnetic anisotropy constant. When an external field H is applied along the easy axis of the particles it is verified that $U = KV(1-H/H_0)^2$ where $H_0$ is the anisotropy field, $H_0 = 2K/M_s$, being $M_s$ the saturation magnetisation.

At a given temperature, any magnetic system has a certain state that corresponds to the absolute minimum of its free energy. All magnetic systems are expected to relax towards that minimum. The metastability of single domain particles, which manifest itself as magnetic hysteresis and relaxation phenomena occur when their magnetic moments, spins, are not oriented along the easy axis.

The magnetic characterisation of ensembles of nanometer size magnets needs to detect the evolution of the net magnetisation as a function of temperature, external magnetic field, time and ac-frequency.

In zero magnetic fields, the total magnetic moment of a non-oriented ensemble of nanomagnets is zero. In the presence of magnetic field H, there is a net magnetisation along the direction of the field as a consequence of the uncompensation between the number of particles whose magnetic moments are aligned along the magnetic field and whose moments have different orientations.

The fact that nanomagnets have always a certain volume distribution f(V) allows to characterise these systems in terms of the so-called blocking temperature

$$T_B = KV_0 / \ln(\nu t)$$

where t is the characteristic time measurement time of the instrument and $V_0$ is the volume above which f(V)V drops rapidly. As a matter of fact the experimental window time t can also be understood as the inverse of the AC frequency measurement. That is, the blocking temperature of the magnetic moment of the particles also depends on the AC frequency. That is, it is always possible to select the experimental window time scale t, at which most of the magnetic moments of all the particles of the ensemble behave superparamagnetic. In a similar way, it is also possible to operate at temperatures at which, for a given t, the magnetic particles behave superparamagnetic. That is at $T > T_B$, the magnetic particles do not show memory effects and the M(H,T) curve show classical Langevin behaviour. At $T < T_B$, there are time dependent phenomena and consequently M(H) show hysteresis.

WO 01/39217 discloses a magnetic fluid medium (ferrofluid), which comprises a suspension of nanoscale ferro- or ferri-magnetic particles dispersed in a carrier liquid. As a result of the process by which they are formed, each of the ferro- or ferro-magnetic particles is initially at least partially accommodated within an organic macromolecule. The ferrofluid may comprise the particles still accommodated within the organic macromolecules or the organic macromolecular shell may be removed from the particles.

According to WO 01/39217 the ferrofluid may be used as magnetic ink for printing and storing information, or may provide a unique magnetic signature for the marking of banknotes or other important documents or items. However, WO 01/39217 stresses that ferrofluids with higher magnetization or those, which can be used at higher temperatures, are desirable, whereas those, which respond to temperature by causing their magnetic properties to lessen dramatically, are undesirable, such as superparamagnetic particles.

GB 1 488 660 describes a security member comprising a magnetic material having a specific temperature or a specific range of temperature, e.g. the Curie temperature, at which a distinct change of magnetic property is exhibited, which temperature or range of temperature is within the limits -10°C to 80°C. The authenticity of the security member is verified by a two-level check above and below the Curie temperature. Above the Curie temperature the material will lose its magnetism, whereas below the Curie temperature it can be magnetized. However, the use of magnetic nanoparticles being superparamagnetic above a predetermined blocking temperature and being hysteretic below said blocking temperature is not disclosed in GB 1 488 660.

US 6 451220 refers to a magnetic composition comprised of cobalt ferrite nanoparticles dispersed in an ionic exchange resin and the use thereof in high density magnetic recording media, articles, and magnetic recording processes. Said nanoparticles are superparamagnetic above the so-called blocking temperature and hysteretic below the blocking temperature. However, US 6 451 220 clearly points out that nanoparticles being superparamagnetic at room temperature are unsuitable for magnetic recording applications and therefore aims at magnetic compositions having a blocking temperature well above room temperature.

EP 0 699 964 relates to magnetic nanocomposite compositions for magnetic applications, such as magnetic imaging and printing with dry and liquid developer compositions, and for electrophotography. The magnetic nanocomposite may have a magnetic memory or no magnetic memory at room temperature depending on particle size and shape. However, the use of the magnetic nanocomposite compositions for a security document is not disclosed in EP 0 699 964.

The publication J. Tejada et al. "Solid containing rotationally free nanocrystalline $\gamma$-$Fe_2O_3$: Material for a nano-scale magnetic compass?" deals with the characterization of a nanocomposite material that contains nanometer size magnets that are free to rotate in response to an applied magnetic field. The composite consists of 5-10 $\mu$m crystals of $\gamma$-$Fe_2O_3$ dispersed in a solid methanol polymer matrix. The material was prepared by freezing a methanol-based ferrofluid of $\gamma$-$Fe_2O_3$ and subjecting it to a magnetic filed applied in alternate directions to anneal the matrix. Before the field treatment, the solid displays magnetic behaviour characteristic of an ordinary nanoscopic magnetic material. It is superparamagnetic above the blocking temperature (160 K) and hysteretic below, showing magnetic remanence and coercivity. After the field treatment to anneal the matrix, the same solid shows only Curie-Weiss behaviour above and below the blocking temperature.

DE 101 18 679 discloses a process for identifying or authenticating a marked object, such as a banknote, comprises detecting the ferromagnetic resonance of at least one ferromagnetic-resonance active marker substance, such as a ferromagnetic, ferrimagnetic, anti- ferromagnetic, paramagnetic, superparamagnetic substance.

EP 1 134 752 describes a magnetic powder for validity determining ink composed of magnetic oxide powder having a Curie temperature between -50°C and 150°C and a mean powder particle diameter of 10 $\mu$m or less.

## SUMMARY OF THE INVENTION

The main objective of the present invention is to provide a more flexible and reliable security feature for secured documents that can be authenticated in a very simple way, and which has improved forgery-proof properties. In addition, the security feature shall be highly flexible, comparable small in thickness and highly durable.

It is another object of the present invention to provide a method for identification and/or authentication of a security document, and in particular for detecting the presence of the security attributes of the present invention within said security documents.

In carrying out these and other objects of the present invention, there is provided a security document comprising on its surface a predetermined area (4) on which a magnetic composition is deposited, characterized in that said magnetic composition comprises magnetic nanoparticles being superparamagnetic above a predetermined blocking temperature and being hysteretic below said blocking temperature. Thereby a highly flexible and reliable security feature for secured documents is made available that can be authenticated in a very simple way, and which has improved forgery-proof properties.

In particular, the security document of the present invention can also be identified and authenticated in an automated process, allowing a very efficient detection of counterfeit money. Especially suitable variations of the security document of the present invention are described in the dependent products claims.

The method claims 13 to 21 describes particularly favourable ways for identification and/or authentication of a security document according to the present invention.

Furthermore, a method for writing data on the security document of the present invention and a method for reading data from the security document of the present invention as well as an apparatus for writing data on the security document of the present invention and an apparatus for reading data from the security document of the present invention are provided.

The method claims 26 to 28 refer to particularly favourable ways for manufacturing a security document of the present invention.

## BRIEF DESCRIPTION OF THE DRAWINGS

For the purpose of illustrating the present invention, the accompanying drawings show embodiments, which are presently preferred; it being understood that the invention is not limited to the arrangements shown.

Fig. 1 illustrates a banknote, on which data can be stored,

Fig. 2 illustrates a reading/writing apparatus for reading/writing the data,

Fig. 3 illustrates a flow chart of intaglio monopigmentary base inks manufacture process, and

Fig. 4 illustrates a particular preferred embodiment of an AC susceptibility measurement.

**DETAILED DESCRIPTION OF THE INVENTION**

The following is a detailed description of the present invention. The present invention provides a security document. The term "security document", as used herein refers to all kind of documents that contain at least one feature that can be used to prevent counterfeiting by providing authentication, identification or classification of the document. In particular, they include banknotes, passports, chequebooks, identity cards, credit cards and/or debit cards. Thereby banknotes are especially preferred.

The security document according to the present invention comprises on its surface a predetermined area on which a magnetic composition comprising magnetic nanoparticles is deposited.

Above a predetermined blocking temperature the magnetic nanoparticle composition of the security document according to the invention is superparamagnetic, i.e. the composition exhibits zero hysteresis, and below the blocking temperature the nanoparticle composition is hysteretic, i.e. the material has memory properties comparable to ordinary ferromagnetic materials.

The blocking temperature is preferably in the range from about 50 K to about 400 K, very preferably from about 200 K to 320 K, especially below room temperature (20 °C). Thereby the blocking temperature is preferably determined by an AC susceptibility measurement at a frequency of 1 MHz (maximum of $\chi'(\omega t)$).

In a preferred embodiment of the present invention the magnetic composition comprises a mixture of nanoparticles having different blocking temperatures.

Thereby the nanoparticles preferably have a different particle size and/or a different anisotropy constant. The difference in the blocking temperature is preferably at least 1 K, very preferably at least 5 K, in particular at least 10 K, and most preferably at least 20 K, wherein the blocking temperature of each component is preferably determined by an AC susceptibility measurement at a frequency of 1 MHz.

According to the present invention the nanoparticle composition is embedded as an active element in an ink and the composition is deposited on the surface of the document by printing a pattern on a predetermined area of the surface of the document. It is an advantage that the document can be produced by using well known printing techniques, e.g. intaglio, offset, silk-screen, ink-jet, flexography, rotogravure printing.

The material of the security document used in the present invention is not critical. However, the use of security documents comprising paper, plastic, polymer, elemental metallic foils, metallic alloy foils and/or synthetic paper is preferred.

The security document of the present invention is comparatively thin and its thickness is preferably smaller than 100 $\mu$m.

Methods for the production of a security document of the present invention are obvious to the skilled person. The security document is preferably provided with the magnetic composition on the form of an ink, wherein a nanomagnetic ink comprising the magnetic composition is applied to the security document. Alternatively, the security document is preferably provided with a security thread comprising the magnetic composition.

The manufacture of the nanomagnetic ink including nanosuperparamagnetic materials as active elements of the ink suitable for the printing of the above security document in accordance with specific printing methods can be performed in a conventional manner. A preferred embodiment of the manufacture process of nanomagnetic ink suitable for the use in specific printing techniques, such as intaglio or offset printing, includes the processing of varnish, organic and magnetic pigments as fundamental constituent parts of the manufacture process.

The processing of varnish has three primary functions. First, to wet the pigment particles and thereby to assist the process of dispersing the pigments in the vehicle system. The better the wetting property of the varnish, the easier it is to disperse the pigments thoroughly. The second function is to incorporate printability into the system. The ink must be stable enough to perform on the press and must ensure faithful reproduction of the printing surface on the printed material. Thirdly, the varnish must bind the pigments to the printed surface so that the final print dries to an acceptable film, which the finished print is designed. Thus, varnishes impart such characteristics as gloss, rub resistance, product resistance, flexibility and adhesion to the finished print.

With reference to intaglio and offset printing, oleoresinous varnishes are produced in closed kettles at high temperature with different kind of resins and organic solvents.

The dispersion of dry materials including organic and magnetic pigments, fillers, etc. is normally done in a mixing vessel. The function of the mixer at this stage is to achieve an accepted level of dispersion. The pigment particles are thoroughly wetted by the varnish and stabilized to allow an optimal grinding process. Due to the mixing process, said organic and magnetic pigments are coated with a layer of varnish replacing the skin of moisture and air previously present.

Subsequently, having dispersed the above dry materials being organic and magnetic pigments, fillers, etc., in a preferred embodiment of the method, a grinding process is carried out using a mill for this operation. The passage of the paste ink through a mill breaks down the pigment agglomerates formed not only during production, but also during storage and transport of the dry pigments into primary particles which may be smaller than the required terminal fineness of the dispersion (normally below 5 microns) as well as being smaller than the roll gap.

The breakdown of these agglomerates, achieved by the high shear forces present in the nip areas between the rollers, causes an increase in the pigments surface areas. This, in turn, leads to the absorption of more binder, during the wetting process, producing an increase in viscosity for a given level of vehicle. The improvement in the degree of dispersion is normally accompanied by an improvement in the level of colour strength of the ink.

In a subsequent step, a let down process is carried out with the addition, in particular, of additives including waxes, antioxidants, antiset-off compounds, etc. to adjust the final properties of the ink.

Ultimately, a final mixing and milling of all components of the ink is carried out for reaching the final state of the ink.

In each step of the ink manufacture process there may be many specific laboratory tests to control the quality of ink. Some of them are the following: Fineness of grind gauge (particle size); Drying and setting time; Rheology, tack and viscosity; Printability; Set-off; Colour strength, hue and opacity; Gloss; Physical and Chemical fastness.

In a preferred method of the invention for manufacturing nanomagnetic ink, said ink is milled for breaking down the pigment agglomerates formed during production using a three roll mill.

In another preferred method of the invention for manufacturing nanomagnetic ink, the above mentioned specific laboratory tests for controlling the quality of ink are established in each step of the ink manufacture process.

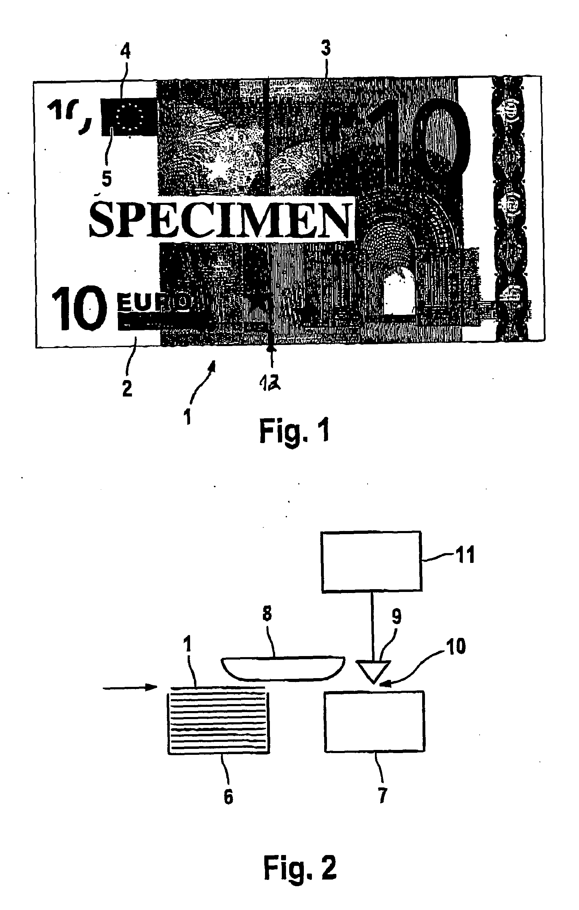

Fig. 1 shows the front side of a security document 1 according to the invention, which is a banknote in the preferred embodiment. The banknote 1 comprises a substrate made of a sheet of paper 2. A graphical design printing 3 is provided on the front and reverse side of the substrate.

The graphical design printing shows a rectangular area 4 on which a magnetic nanoparticle composition is preferably deposited. The magnetic composition is embedded in the ink for printing the rectangular pattern 5 on the surface of the sheet of paper 2. Since the pattern is part of the graphical design printing of the banknote, it is not visible on which area of the banknote the magnetic composition is deposited.

Furthermore, the banknote preferably comprises a security thread 12, which preferably comprises the magnetic nanoparticle composition of the invention.

Fig. 2 shows a schematic view of a reading/writing apparatus for reading/writing the data. The apparatus comprises a station 6 for receiving the security documents 1, e,g, banknotes, and a station 7 for transporting the banknotes along a linear path. The banknote receiving station 6 comprises means 8 for cooling the banknote down to a temperature below the blocking temperature of the magnetic nanoparticle composition. The transporting station 7 comprises writing means 9 for magnetizing the magnetic nanoparticle composition as well as reading means 9 for reading the data to be stored, e.g. a magnetic reading/writing head 9. The magnetic reading/writing head 9 is arranged in the path 10 for the banknotes close to the above-designated rectangular area of the banknote. As the banknote passes the magnetic head 9, the magnetic head produces an electrical signal for further processing in a data processing unit 11 to read the data from the document or the data processing unit produces a signal for the magnetic head to magnetize the magnetic composition to store the data on the document.

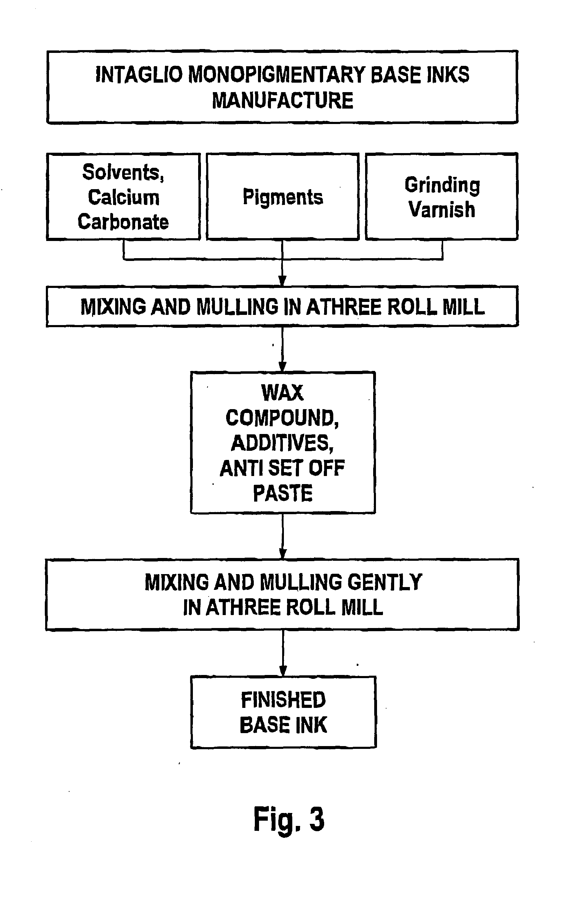

Fig. 3 shows a flow chart of an intaglio monopigmentary base inks manufacture process providing said nanomagnetic ink suitable for manufacturing the above security document. In the first step, three constituent parts of the manufacture process being grinding varnish, organic and magnetic pigments and solvents are mixed in a mixing vessel for dispersing the dry materials being organic and magnetic pigments thoroughly within the ink, thereby wetting the pigment particles in the vehicle system.

Subsequently, a milling process using a three roll mill is carried out so as to break down the pigment agglomerates within the ink formed during mixing, wherein the breakdown of these agglomerates is achieved by the high shear forces present in the nip areas between the rollers.

In a subsequent step, the addition of additives including waxes, antioxidants, antiset-off compounds, etc. is carried out to adjust the final properties of the ink.

In a final step, the ink again is exposed to a gentle mixing and milling, wherein the ink is milled using a three roll mill, before said monopigmentary base ink reaches the final state so as to be usable for the printing of said security document.

In this case, each step of the ink manufacture process is exposed to specific laboratory tests for controlling the quality of ink.

The following example of a magnetic nanoparticle composition to be embedded in an ink is illustrative of the invention:

Either $\gamma$-Fe$_2$O$_3$ or CoFe$_2$O$_4$ magnetic nanoparticles were prepared by matrix-mediated in-situ precipitation as disclosed in (1) Del Barco, E.; Asenjo, J.; Zhang, X. X.; Pieczynski, Julia.; Tejada, J.; Ziolo, R. F.; Fiorani, D.; Testa, A. M. *Chem. Mater.* 2001, 13,1487-1490, (2) Tejada, J.; Zhang, X. X.; Kroll, E. C.; Bohigas, X.; Ziolo, R. *J. Appl. Phys.* 2000, 87, 8008 - 8012, (3) Ziolo, R. F.; Giannelis, E. P.; Weinstein, B. A.; O'Horo, M. P.; Ganguly, B. N.; Mehrotra, V.; Russell, M. W.; Huffmann, D. R. Science 1992, 257, 219 - 223, the disclosure of which is incorporated herein by reference of its entirety. Typically for $\gamma$-Fe$_2$O$_3$ magnetic nanoparticles, 240g of BIORAD AG50WX4-100 divinylbenzene crosslinked polystyrene sulfonated ion exchange resin with a nominal exchange capacity of 5,2 meq/g dry was suspended in 1000 ml and exchanged with 91.20 g of FeCl$_2$.4H$_2$O dissolved in 1000 ml of H$_2$O. After 1 hour of stirring at room temperature, solution is decanted and exchanger resin washed with water until no presence of Fe(II) in the rinses. The exchanged resin was resuspended in 1000 ml of H$_2$O and then exposed to an aqueous solution of 100 g of NaOH in 1000 ml of H$_2$O at 60°C, which causes the precipitation of the corresponding hydroxide. The conversion to oxide is then obtained by drop wise addition of 192 ml of H$_2$O$_2$ at 30 % diluted in 240 ml of H$_2$O into the heated basic suspension of the exchanged resin. Stirring at 60°C was maintained during 1 hour. The resin was then washed thoroughly with distilled water to neutral pH. The same procedure with minor changes is done for CoFe$_2$O$_4$ magnetic nanoparticles.

Particle size and concentration can be tuned by the number of cycles performed over the same resin by taking advantage of the presence of chemical addressable sites free at the end of each process. The number of cycles performed over the same matrix is used for modulating the particle characteristics. Also, the use of different types of resins can also modulate these properties for the same number of cycles.

The security document of the present invention can be identified and/or its authenticity can be verified in a very simple manner by

- measuring the AC susceptibility of the magnetic composition at one or more predetermined frequencies at one or more predetermined temperatures; and
- comparing the result to one or more predetermined values.

The main idea of the AC susceptibility measurement is to study the response of the magnetic moment of the nanoparticles under the influence of an weak oscillating magnetic field, $h = h_0 \cos(\omega t)$. The magnetic moment of a particle will thus change under the action of this field as $M(t) = \chi_0(t)h_0 \cos(\omega t)$. From the experimental point of view, the important question is to measure the magnetic susceptibility

$$M = \chi' \, h_0 \, \cos(\omega t) + \chi'' \, h_0 \, \sin(\omega t), \qquad (1)$$

where X' and $\chi''$ are respectively the in-phase and out-of-phase components of the magnetic susceptibility. Both components are strongly dependent on the volume of the magnetic particle and the frequency $\omega$ of the AC electromagnetic field, and so the modulus of the magnetic susceptibility will also depend on both magnitudes. Moreover, the magnetic susceptibility is also very sensitive to the volume distribution inside the magnetic sample. There is, therefore, a chance to have a one-to-one correspondence between the average size of the particles and the frequency operation of the experimental equipment. Consequently a maximum in the AC susceptibility it is expected at the blocking temperature, T$_B$. In other words, the maximum of the AC susceptibility is achieved when the operation frequency equals the overbarrier frequency, That is, a mapping of the average volume of the particles can be performed by measuring the AC magnetic susceptibility of single domain particles. The important point to consider is that the operation frequency scales exponentially with the average volume of the particles.

In the present invention, it is particularly preferred to measure the AC susceptibility at at least one frequency in the range of 1 Hz to 100 GHz, very preferably in the range of 50 MHz to 50 GHz, in particular in the range of 500 MHz to 50 GHz, and most preferably in the range of 1 GHz to 10 GHz. Thereby the present invention allows that the AC susceptibility is measured at a temperature above the blocking temperature of the magnetic composition wherein said blocking temperature is determined by an AC susceptibility measurement at a frequency of 1 MHz. In that context temperatures between 80 K and 300 K, suitably above 270 K, and in particular above room temperature (20 °C) have proven of particular advantage.

Furthermore, it is especially preferred to measure the AC susceptibility at one or more single frequencies, preferably one or more resonant frequencies of the magnetic composition and/or to measure at least two different frequencies.

The method of the present invention is particular suitable to verify the average particle size of said magnetic nanoparticles and/or the particle size distribution of said magnetic nanoparticles,

According to an especially preferred embodiment of the present invention, the AC susceptibility is measured by the use of a magnetic susceptometer operating in the frequency range between 50 MHz and 50 GHz, very preferably within the range of 500 MHz and 50 GHz, and particular within the range of 1 GHz and 10 GHz. This magnetic susceptometer is preferably based upon the variation in the transmitted energy through a microstrip resonator when a sample made of magnetic nanoparticles is placed in the areas at which there is a maximum of the resonant magnetic modes of the microstrip, By changing the dimensions and shape of the microstrip the resonance frequencies as well as the quality factor of such resonances are preferably changed.

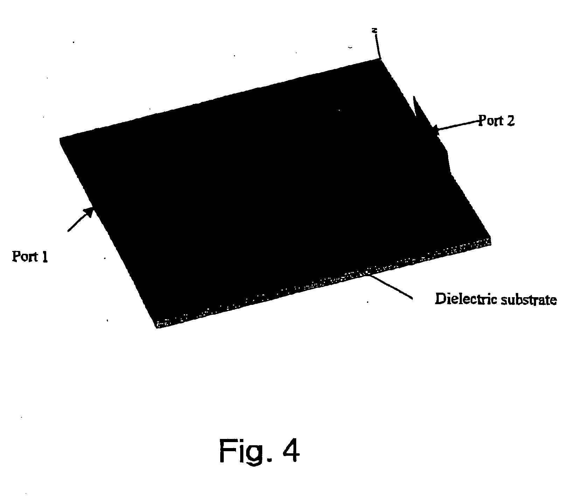

Fig. 4 illustrates an AC susceptibility measurement particularly suitable for the purposes of the present invention. The microwaves preferably enter the system by the port 1 and are detected at the port 2. The magnetic nanoparticles are preferably placed in the slot line of the microstrip, which preferably corresponds to the maximum magnetic field of a resonant magnetic mode. The absorbed energy by the magnetic nanoparticles is proportional to the imaginary component of the magnetic susceptibility and the modulus square of the magnetic field carried out by the microwaves. This energy absorption also depends very much on the external dc applied magnetic field as it does the magnetic susceptibility.

For the generation of the microwaves both high sophisticated generators and small and non-expensive single frequency generators can be used. For the detection of the microwaves both network analysers and single frequency detectors can be used. The important point here to remark is that the use of actual single frequency devices also allows a high operation quality wherein the results are highly reproducible.

With the uses of single frequency detectors and generators it is possible to distinguish between nanoparticles with different average radius and/or size distribution.

In addition, the following additional advantages can be achieved:

- Only very small particles produce high magnetic signals.

- Counterfeits are easily detected since the signal spectrum is specific to each nanoparticle or nanoparficle mixture.

- Metals give negative signals at these high frequencies (GHz) while the superparamagnetic nanoparticles generate positive signals.

- An external dc magnetic field is not necessary. However, by applying external de magnetic fields it is possible to achieve a more sophisticated codification of the nanoparticles.

Finally it is also possible to verify the hysteretic properties of the magnetic composition below the blocking temperature. In that context, conventional methods, such as cooling the security document below the blocking temperature, writing specific data on the security document and re-reading said data, can be applied.

According to one especially preferred embodiment of the present invention, the security document is used for data storage. Thereby, the data to be stored are not visible for the public. Since the blocking temperature is preferably below room temperature, the data can also not be read by simply using a magnetic reading head. Therefore, the security document according to the invention allows the issuing authorities to record information without public awareness.

For writing data on the security document according to the invention, the document is cooled down to a temperature below the blocking temperature so that the magnetic nanoparticle composition has memory properties comparable to ordinary ferromagnetic materials. The nanoparticle composition on the predetermined area of the surface of the document is then magnetized in a pattern determined by the data to be stored. All well known methods for magnetic data storage can be used. After that the document is warmed up to a temperature above the blocking temperature so that the composition exhibits zero hysteresis and thus the data cannot be read.

The reading process above the blocking temperature can only by encrypted by the geometrical arrangement of the magnetic pigments containing the single domain particles, preferably of different blocking temperatures. For reading data using conventional de methods on the security document, the document should be cooled down to a temperature below the blocking temperature, preferably below the lowest blocking temperature of the nanoparticles so that the magnetic nanoparticle composition receives its memory properties again. The nanoparticle composition is then read by passing the document magnetic reading means. All well-known methods for magnetic data storage can also be used. After that the document is warmed up to a temperature above the blocking temperature so that the data cannot be read.

The nanoparticle composition allows a high data storage density so that the area on which the composition is deposited on the surface of the security document may be small.

An apparatus for writing data on the security document and reading data on the security document according to the invention comprises means for cooling the document to a temperature below the blocking temperature and magnetic writing means for magnetizing the nanoparticle composition on a predetermined area of the surface of the document in a pattern determined by the data to be stored and magnetic reading means for reading the data to be stored, respectively.

**Claims**

1.   Security document comprising on its surface a predetermined area (4) on which a magnetic composition is deposited, **characterized in that** said magnetic composition comprises magnetic nanoparticles being superparamagnetic above a predetermined blocking temperature and being hysteretic below said blocking temperature.

2.   Security document according to claim 1, **characterized in that** said blocking temperature is in the range of 50 K to 400 K wherein said blocking temperature is determined by an AC susceptibility measurement at a frequency of 1 MHz.

3. Security document according to claim 1 or 2, **characterized in that** said blocking temperature is in the range of 200 K to 320 K wherein said blocking temperature is determined by an AC susceptibility measurement at a frequency of 1 MHz.

4. Security document according to at least one of the previous claims, **characterized in that** said magnetic composition comprises a mixture of nanoparticles having different blocking temperatures.

5. Security document according to claim 4, **characterized in that** said nanoparticles have a different particle size.

6. Security document according to claim 4 or 5, **characterized in that** said nanoparticles have a different anisotropy constant.

7. Security document according to at least one of the claims 4 to 6, **characterized in that** said blocking temperature of the nanoparticles differs by at least 20 K wherein said blocking temperature is determined by an AC susceptibility measurement at a frequency of 1 MHz.

8. Security document according to at least one of the previous claims, **characterized in that** said nanoparticles are embedded in an ink deposited on a predetermined area of the surface of the security document.

9. Security document according to at least one of the claims 1 to 7, **characterized in that** said security document comprises a security thread comprising said magnetic composition.

10. Security document according to at least one of the previous claims, **characterized in that** said security document is a banknote, a passport, a chequebook, an identity card, a credit card or a debit card.

11. Security document according to at least one of the preceding claims, **characterized in that** security document comprises paper, plastic, polymer, elemental metallic foils, metallic alloy foils and/or synthetic paper.

12. Security document according to at least one of the preceding claims, **characterized in that** the thickness of the security document is smaller than 100 $\mu$m.

13. Method for identification and/or authentication of a security document according to at least one of the preceding claims, **characterized in that**

  - the AC susceptibility of said magnetic composition is measured at one or more predetermined frequencies at one or more predetermined temperatures; and
  - the result is compared to one or more predetermined values.

14. Method according to claim 13, **characterized in that** said AC susceptibility is measured at at least one frequency in the range of 1 Hz to 100 GHz.

15. Method according to claim 14, **characterized in that** said AC susceptibility is measured at at least one frequency in the range of 50 MHz to 50 GHz.

16. Method according to claim 15, **characterized in that** said AC susceptibility is measured at at least one frequency in the range of 1 GHz to 10 GHz.

17. Method according to at least one of the claims 13 to 16, **characterized in that** said AC susceptibility is measured at a temperature above the blocking temperature of the magnetic composition wherein said blocking temperature is determined by an AC susceptibility measurement at a frequency of 1 MHz.

18. Method according to at least one of the claims 13 to 17, **characterized in that** said AC susceptibility is measured at one or more single frequencies.

19. Method according to at least one of the claims 13 to 18, **characterized in that** said AC susceptibility is measured at at least two different frequencies.

**20.** Method according to at least one of the claims 13 to 19, **characterized in that** the average particle size of said magnetic nanoparticles is verified.

**21.** Method according to at least one of the claims 13 to 20, **characterized in that** the particle size distribution of said magnetic nanoparticles is verified.

**22.** Method for writing data on a security document according to one of claims 1 to 12 with the following steps;

- cooling the security document down to a temperature below the blocking temperature of the magnetic nanoparticle composition,
- magnetizing the magnetic nanoparticle composition on the predetermined area of the surface of the security document in a pattern determined by the data to be stored, and
- warming the security document up to a temperature above the blocking temperature.

**23.** Method for reading data from a security document according to one of claims 1 to 12 with the following steps;

- cooling the security document down to a temperature below the blocking temperature of the magnetic nanoparticle composition,
- providing magnetic reading means and passing the security document the magnetic reading means,
- warming the security document up to a temperature above the blocking temperature.

**24.** Apparatus for writing data on a security document according to one of claims 1 to 12 comprising:

- means (8) for cooling the security document (1) down to a temperature below the blocking temperature, and
- magnetic writing means (9) for magnetizing the magnetic nanoparticle composition on the predetermined area (4) of the surface of the security document (1) in a pattern determined by the data to be stored.

**25.** Apparatus for reading data from a security document according to one of claims 1 to 12 comprising:

- means (8) for cooling the security document (1) down to a temperature below the blocking temperature, and
- magnetic reading means (9) for reading the data stored on the predetermined area (4) of the surface of the security document (1).

**26.** Method for manufacturing a security document according to one of claims 1 to 12, with the steps of providing a substrate for said security document, providing an ink comprising magnetic nanoparticles, and printing at least one predetermined area of said substrate of the security document using said magnetic nanoparticles.

**27.** Method for manufacturing a security document according to claim 26, wherein the step of providing an ink including magnetic nanoparticles comprises the following steps:

- Mixing grinding varnish, organic and magnetic pigments and solvents, withite the ink,
- Subsequently, milling the ink for breaking down the pigment agglomerates within the ink formed during mixing,
- Adding of additives, in particular, at least one of waxes, antioxidants, antiset-off compounds, and
- Finally mixing and milling all components of the ink.

**28.** Method for manufacturing a security document according to claim 26 or 27, wherein the ink is milled using a three roll mill.

**Fig. 1**

**Fig. 2**

INTAGLIO MONOPIGMENTARY BASE INKS MANUFACTURE

| Solvents, Calcium Carbonate | Pigments | Grinding Varnish |

MIXING AND MULLING IN A THREE ROLL MILL

WAX COMPOUND, ADDITIVES, ANTI SET OFF PASTE

MIXING AND MULLING GENTLY IN A THREE ROLL MILL

FINISHED BASE INK

## Fig. 3

Port 2

Port 1

Dielectric substrate

Fig. 4